(19) Europäisches Patentamt
European Patent Office
Office européen des brevets

(11) Numéro de publication: **0 014 629**
**B1**

(12) # FASCICULE DE BREVET EUROPEEN

(45) Date de publication du fascicule du brevet: **22.12.82**

(21) Numéro de dépôt: **80400126.1**

(22) Date de dépôt: **25.01.80**

(51) Int. Cl.³: **C 01 G 55/00, C 22 B 11/04, G 21 C 19/46**

(54) **Procédé de récupération de ruthénium présent dans une solution aqueuse nitrique et application de ce procédé à une solution nitrique obtenue par dissolution d'éléments combustibles irradiés.**

(30) Priorité: **08.02.79 FR 7903241**

(43) Date de publication de la demande:
**20.08.80 Bulletin 80/17**

(45) Mention de la délivrance du brevet:
**22.12.82 Bulletin 82/51**

(84) Etats contractants désignés:
**BE DE GB SE**

(56) Documents cités:
**FR - A - 1 515 048**
**US - A - 2 894 816**
**US - A - 4 011 297**
**US - A - 4 107 261**

**CHEMICAL ABSTRACTS, vol. 89, no. 18, 30 octobre 1978, ref. 153439n page 423 Columbus, Ohio, US**
**N. A. BORSHCH et al.: "Solvent extraction concentration of iridium and other platinum metals by bis (2-ethylhexyl)dithiophosphate"**

(73) Titulaire: **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur: **Fitoussi, Richard**
**5, Impasse du Débarcadère**
**F-78000 Versailles (FR)**
Inventeur: **Lours, Sylvie**
**41, Avenue Jean Moulin**
**F-92260 Fontenay-aux-Roses (FR)**
Inventeur: **Musikas, Claude**
**12, rue du Moulin de la Planche**
**F-91120 Villebon (FR)**

(74) Mandataire: **Mongrédien, André et al,**
**c/o Brevatome 25, rue de Ponthieu**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 014 629 B1**

(56) Documents cités
CHEMICAL ABSTRACTS, vol. 79, 1973, ref. 95135r, page 193
Columbus, Ohio, US
B. P. BLEDNOV et al.: "Extraction of palladium from chloride solutions with tri-n-octyl-phosphine sulfide"

Comprehensive Inorganic Chemistry, Bailar Jr. et al., Vol. 2, Pergamon (1973)

# Procédé de récupération de ruthénium présent dans une solution aqueuse nitrique et application de ce procédé à une solution nitrique obtenue par dissolution d'éléments combustibles irradiés

L'invention a pour objet un procédé de récupération du ruthénium présent dans une solution aqueuse nitrique, et plus particulièrement un procédé pour récupérer le ruthénium radioactif présent dans une solution nitrique obtenue par dissolution d'éléments combustibles nucléaires irradiés.

Les procédés habituels de retraitement d'éléments combustibles nucléaires irradiés comprennent pour la plupart une première étape de dissolution de combustible nucléaire au moyen d'acide nitrique, ce qui conduit à l'obtention d'une solution nitrique contenant non seulement l'uranium et le plutonium, mais également certains produits de fission, notamment du ruthénium qui se trouve présent à des teneurs non négligeables dans les combustibles irradiés. En effet, une tonne d'uranium irradié dans un réacteur nucléaire à eau légère contient environ 2300 g de ruthénium.

La récupération du ruthénium à partir de ces solutions présente donc un grand intérêt non seulement pour assurer une purification satisfaisante de l'uranium et du plutonium, mais aussi en raison des propriétés métallurgiques, catalytiques et photochimiques du ruthénium qui en font un élément recherché pour de nombreuses applications. Cependant, dans les procédés de retraitement des combustibles irradiés, la récupération du ruthénium pose certains problèmes car lors du premier cycle d'extraction de l'uranium et du plutonium dans un solvant organique tel que le tributyl phosphate, la fraction de ruthénium qui est extrait également dans ce solvant, est difficilement réextractible et les solvants usés présentent de ce fait une activité résiduelle importante.

Aussi, il est souhaitable de récupérer quantitativement le ruthénium avant de soumettre la solution nitrique de dissolution à un premier cycle d'extraction de l'uranium et du plutonium.

Les procédés connus actuellement pour récupérer le ruthénium à partir de solutions nitriques consistent à transformer les complexes de ruthénium présent dans ces solutions en tétroxyde de ruthénium $RuO_4$ volatil. Cette volatilisation du ruthénium est généralement réalisée au moyen d'ozone, ou d'autres oxydants comme des anions tels que les permanganates, les dichromates, les periodates, les chromates, des cations métalliques tels que l'argent, le cérium (IV), le cobalt, ou encore du bioxyde de plomb.

On connaît également un procédé de récupération du ruthénium présent dans une solution nitrique, qui consiste à ajouter des ions nitrites à la solution et à faire passer de l'ozone à travers cette solution pour former et volatiliser le tétroxyde de ruthénium.

Cependant, de tels procédés présentent certains inconvénients.

En effet, il est nécessaire de chauffer la solution à une température d'environ 95°C. Par ailleurs, ces procédés nécessitent l'adjonction de catalyseurs à la solution nitrique et ils ne permettent de récupérer quantitativement le ruthénium qu'en opérant pendant une durée relativement longue, de l'ordre de 12 heures environ.

On connaît aussi un procédé d'extraction du ruthénium à partir de solutions aqueuses au moyen de solvants organiques, en présence d'ions nitrites.

Par ailleurs, comme cela est décrit dans Chemical Abstracts, vol. 89, n° 18, p. 423, 153439n, on a envisagé de réaliser l'extraction du ruthénium à partir de solutions chlorhydriques au moyen d'acides dialkyl di-thiophosphoriques.

Cependant, ces procédés ne permettent pas d'obtenir une récupération quantitative du ruthénium à partir de solutions nitriques.

La présente invention a précisément pour objet un procédé de récupération du ruthénium qui pallie les inconvénients précités.

Le procédé selon l'invention de récupération du ruthénium présent dans une solution aqueuse consiste à mettre en contact ladite solution avec une phase organique comprenant un composé organophosphoré comportant au moins un atome de soufre donneur d'électrons et il se caractérise en ce que, ladite solution aqueuse étant une solution nitrique, on réalise la mise en contact de la solution aqueuse nitrique avec la phase organique en présence d'un composé apte à déplacer les ions $NO^+$ des complexes de ruthénium présents dans ladite solution nitrique. Des composés aptes à déplacer les ions $NO^+$ sont par exemple décrits dans: Comprehensive Inorganic Chemistry - p. 372—375, Bailar Jr. et al., Vol. 2 - Pergamon (1973).

Selon l'invention, ledit composé organophosphoré est avantageusement un acide dialkyl-dithiophosphorique tel que l'acide di-(2-éthyl-hexyl)-dithiophosphorique.

Le procédé tel que caractérisé ci-dessus, présente notamment l'avantage de conduire à une récupération quantitative du ruthénium, présent dans une solution nitrique obtenue par exemple par dissolution d'éléments combustibles nucléaires irradiés. En effet, dans ce cas, l'uranium VI et le plutonium ne sont pratiquement pas extraits dans le solvant organique, et l'on peut ainsi récupérer le ruthénium avec des rendements satisfaisants.

Selon l'invention, le composé apte à déplacer les ions $NO^+$ des complexes de ruthénium présents dans la solution nitrique est avantageusement l'acide sulfamique ou l'hydrazine.

De préférence, lorsqu'on utilise l'acide sulfamique, on ajoute ce dernier à la phase aqueuse en quantité telle que la concentration en acide sulfamique de la phase aqueuse soit comprise entre 0,05 et 1 M/l.

Avantageusement, on réalise l'extraction à une température comprise entre 20 et 80°C, de préférence à 70°C.

Lorsqu'on réalise l'extraction du ruthénium au moyen d'acide di-(2-éthylhexyl)-dithiophosphorique, en présence d'acide sulfamique, il se forme dans la phase organique un complexe du ruthénium qui présente en spectrométrie ultraviolette, trois bandes d'absorption respectivement à 515, 415 et 360 nanomètres, ce qui correspond sans doute à l'extraction d'un complexe répondant à la formule suivante:

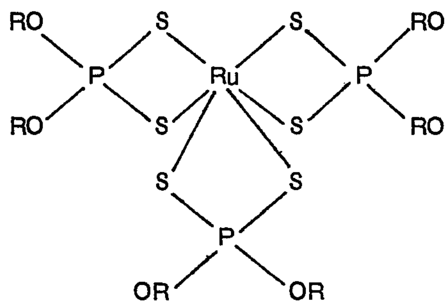

dans laquelle R représente le radical 2-éthyl-hexyl.

On pense que le mécanisme d'extraction correspond au schéma réactionnel suivant:

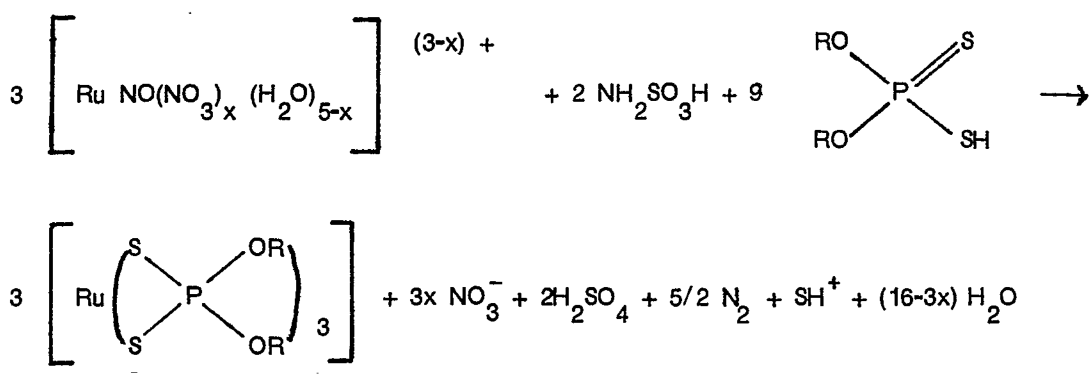


Selon une variante du procédé de l'invention, on réalise l'extraction du ruthénium au moyen d'une phase organique comprenant un composé organophosphoré comportant au moins un atome de soufre donneur d'électrons et un sel d'ammonium quaternaire tel que le chlorure de tricaprylméthyl ammonium.

Selon cette variante du procédé de l'invention, on améliore le coefficient d'extraction du ruthénium, sans doute en raison du fait que le ruthénium présent en solution nitrique peut exister sous différentes valences et que la présence du sel d'ammonium quaternaire permet ainsi de réaliser l'extraction de complexes anioniques correspondant à la valence 2 du ruthénium.

Dans cette variante du procédé de l'invention, on réalise également l'extraction, en présence d'un composé apte à déplacer les ions $NO^+$ des complexes de ruthénium, avantageusement à une température comprise entre 20 et 80°C, de préférence à une température de 70°C.

Dans ce cas, le complexe de ruthénium extrait dans la phase organique présente également en spectrométrie ultraviolette trois bandes d'absorption respectivement à 550, 465 et 370 nanomètres. On suppose que dans ce cas, le mécanisme d'extraction correspond au schéma réactionnel suivant:

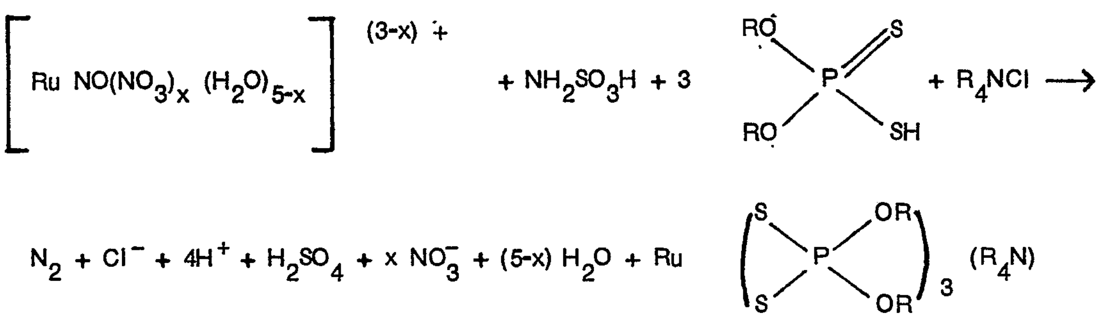


Pour la mise en oeuvre du procédé de l'invention, le solvant organique comprend

avantageusement un diluant inerte tel que le dodécane.

On précise que le procédé de l'invention peut être mis en oeuvre dans tout appareillage classique d'extraction en particulier dans des batteries de mélangeur décanteur, des colonnes pulsées, des extracteurs centrifuges, etc.

L'invention sera mieux comprise à la lecture des exemples suivants, donnés bien entendu à titre illustratif et non limitatif, se référant aux dessins en annexe.

— les figures 1, 2 et 3 sont des diagrammes représentant les variations du coefficient de distribution ou de partage D du ruthénium en fonction du temps (en minutes), dans le cas d'une extraction réalisée au moyen d'un solvant organique constitué par de l'acide di-(2-éthylhexyl)-dithiophosphorique dilué dans du dodécane, les figures 1, 2 et 3 illustrant respectivement l'effet de la température, de l'adjonction d'acide sulfamique et de l'adjonction d'hydrazine sur le coefficient de partage D;

— la figure 4 est un diagramme représentant les variations du coefficient de partage D du ruthénium en fonction de la concentration en acide nitrique de la solution de départ, lors d'une extraction réalisée au moyen d'acide di-(2-éthyl-hexyl)-dithiophosphorique;

— la figure 5 est un diagramme représentant les variations du coefficient de partage D du ruthénium en fonction du temps et illustrant l'effet de la présence de nitrate d'uranyle dans la solution de départ;

— la figure 6 est un diagramme représentant les variations du coefficient de partage D du ruthénium, en fonction du temps, dans le cas d'une extraction réalisée au moyen d'un solvant organique comprenant de l'acide di-(2-éthylhexyl)-dithiophosphorique et du chlorure de tricapryl-méthylammonium.

Exemple 1

Cet exemple se rapporte à la récupération du ruthénium à partir d'une solution d'acide nitrique 3N contenant $2,6.10^{-3}$M par litre de ruthénium radioactif sous la forme de complexes mixtes nitrato, nitrosoruthénium aux valences II, III et IV.

Dans cet exemple, on utilise pour l'extraction du ruthénium un solvant organique constitué par de l'acide di-(2-éthylhexyl)-dithiophosphorique (DEHDTP) dilué dans du dodécane, la concentration en DEHDTP de la phase organique étant de 0,5 M par litre.

On réalise l'extraction dans un appareil thermostaté par circulation d'eau, en mettant en contact dans cet appareil 20 $cm^3$ de phase aqueuse et 20 $cm^3$ de phase organique et en agitant les deux phases en présence au moyen d'un barreau magnétique tournant.

Au cours de l'extraction, on prélève les phases en présence sous agitation, et après les avoir séparées par centrifugation, on analyse chacune d'elles par spectrométrie gamma afin de déterminer leurs concentrations respectives en ruthénium, ce qui permet de calculer le coefficient de distribution ou de partage D du ruthénium, qui est égal au rapport de la concentration en ruthénium de la phase organique sur la concentration en ruthénium de la phase aqueuse.

Dans une première série d'expériences, on effectue cette extraction par solvant, après avoir ajouté à la phase aqueuse 0,25 M/l d'acide sulfamique, et on réalise l'extraction à des températures de 20°C, 50°C et 70°C, en déterminant pour chaque température le coefficient de partage du ruthénium, en fonction du temps.

Les résultats obtenus sont donnés sur la figure 1 qui représente les variations du coefficient de partage D du ruthénium en fonction du temps (en minutes) pour des extractions réalisées respectivement à des températures de 70°C (courbe I), 50°C (courbe II), et 20°C (courbe III).

Au vu de cette figure, on constate que le coefficient de partage augmente avec la température, les meilleurs résultats étant obtenus lorsque l'extraction est réalisée à 70°C.

Dans une deuxième série d'expériences, on réalise l'extraction du ruthénium, soit à une température de 70°C, soit à une température de 50°C, à partir de phases aqueuses ayant des concentrations différentes en acide sulfamique, en déterminant également, dans chaque cas, le coefficient de partage D du ruthénium en fonction du temps.

Les résultats obtenus sont donnés sur la figure 2 qui illustre les variations du coefficient de partage D en fonction du temps, pour des extractions réalisées à 70°C avec des concentrations en acide sulfamique de 0,5 M/l (courbe I) et de 0,01 M/l (courbe III), et pour des extractions réalisées à 50°C avec des concentrations en acide sulfamique de 0,4 M/l (courbe II) et en l'absence d'acide sulfamique (courbe IV).

Au vu de ces résultats, on constate que le coefficient de partage D est faible en l'absence d'acide sulfamique (courbe IV) et que l'adjonction d'acide sulfamique permet d'améliorer ce coefficient de partage.

Par ailleurs, on a constaté qu'à partir d'une concentration en acide sulfamique de 0,4 M/l, la cinétique d'extraction du ruthénium ne varie pratiquement plus.

Dans une troisième série d'expériences, on réalise l'extraction du ruthénium en ajoutant à la phase aqueuse de l'hydrazine, l'extraction étant réalisée à une température de 70°C.

Les résultats obtenus sont donnés sur la figure 3 qui représente les variations du coefficient de partage D du ruthénium en fonction du temps, pour des extractions réalisées à partir de phases

aqueuses respectivement des concentrations en hydrazine de 0,1 M/l (courbe I) et de 0,01 M/l (courbe II).

On constate ainsi que l'hydrazine permet également d'améliorer le coefficient de partage D, mais qu'elle est moins efficace que l'acide sulfamique.

Exemple 2

Cet exemple se rapporte à la récupération du ruthénium à partir d'une solution nitrique ayant une concentration en ruthénium de $2{,}6.10^{-3}$M/l et une concentration en acide sulfamique de 0,5 M/l.

Dans cet exemple, on réalise l'extraction à une température de 50°C, en mettant en contact 20 $cm^3$ de la solution nitrique avec 20 $cm^3$ de solvant organique constitué par de l'acide di-2-éthylhexyldithiophosphorique dilué dans du dodécane, la concentration en DEHDTP de la phase organique étant de 0,5 M.

Après six heures d'extraction sous agitation, on sépare les deux phases par centrifugation, et on détermine le coefficient de partage D du ruthénium comme dans l'exemple 1.

Les résultats obtenus lorsqu'on fait varier la concentration en acide nitrique de la solution de départ, sont donnés sur la figure 4 qui représente les variations du coefficient de partage D du ruthénium en fonction de la concentration en acide nitrique de la phase aqueuse.

Au vu de ces résultats, on constate que le coefficient de partage D varie peu lorsque la concentration en acide nitrique est comprise entre 0,3 N et 3N, mais qu'il diminue très rapidement lorsque la concentration en acide nitrique est supérieure à 5N.

Exemple 3

Dans cet exemple, on récupère de ruthénium à partir d'une solution nitrique 3N, contenant $2{,}6.10^{-3}$ moles par litre de ruthénium, 0,5 M/l de nitrate d'uranyle et 0,25 M/l d'acide sulfamique.

L'extraction est réalisée à une température de 50°C, en utilisant le même solvant organique que celui de l'exemple 1.

On détermine également le coefficient de partage D du ruthénium en fonction du temps, comme dans l'exemple 1.

Les résultats obtenus sont donnés sur la figure 5, sur laquelle la courbe I représente les variations du coefficient de partage D du ruthénium en fonction du temps, lorsque la phase aqueuse comprend du nitrate d'uranyle, la courbe II correspondant à la même expérieure réalisée en l'absence de nitrate d'uranyle.

Au vu de cette figure, on constate que les coefficients de partage D sont comparables et que l'uranium n'a pas d'effet sur la cinétique d'extraction. Par ailleurs, il convient de noter que l'uranium n'est pratiquement pas extrait dans le solvant organique, le coefficient de partage D de l'uranium étant de $3.10^{-2}$ après 300 minutes d'extraction.

Exemple 4

Cet exemple se rapporte à la récupération du ruthénium à partir d'une solution nitrique 3N contenant $2{,}6.10^{-3}$ M/l de ruthénium.

Dans cet exemple, on utilise un solvant organique constitué par un mélange d'acide di-(2-éthylhexyl)-dithiophosphorique (DEHDTP) et de chlorure de tricaprylméthyl ammonium, dilué dans du dodécane, la concentration en DEHDTP de la phase organique étant de 0,5 M et la concentration en chlorure de tricaprylméthyl ammonium de la phase organique étant de 0,1 M.

Dans cet exemple, on réalise l'extraction à une température de 20 à 50°C après avoir ajouté ou non à la phase aqueuse de l'acide sulfamique et éventuellement du nitrate d'uranyle.

On détermine, dans chaque cas, le coefficient de partage D du ruthénium en fonction du temps, comme dans l'exemple 1.

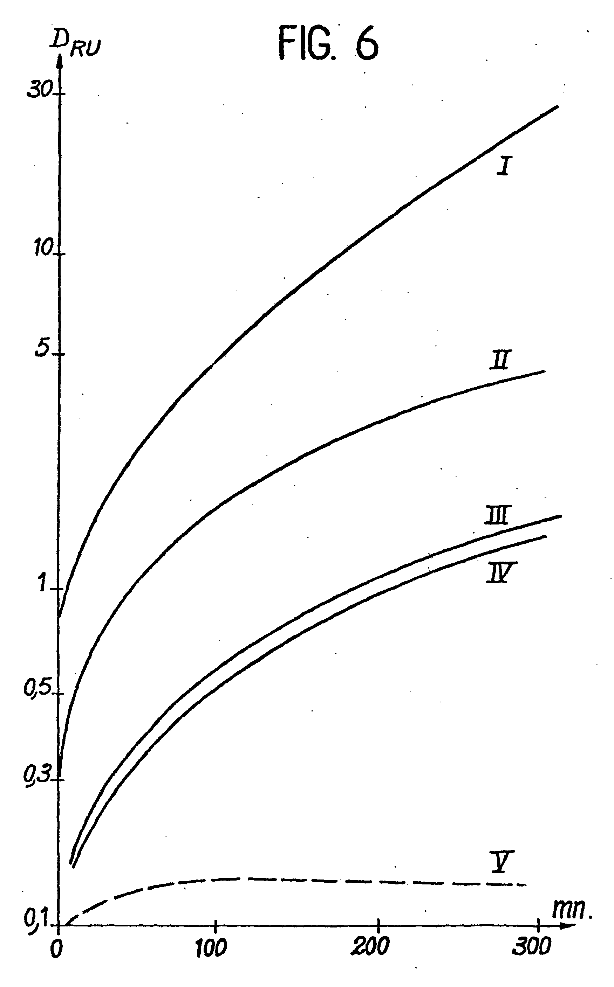

Les résultats obtenus sont donnés sur la figure 6 qui représente les variations du coefficient de partage D du ruthénium en fonction du temps, pour des extractions réalisées dans les conditions suivantes:

Courbe I:

Phase aqueuse contenant 0,25 M/l d'acide sulfamique, extraction réalisée à 50°C.

Courbe II; (référence)

Phase aqueuse contenant 0,25 M/l d'acide sulfamique, mais extraction réalisée au moyen de DEHDTP seul, à 50°C.

Courbe III:

Phase aqueuse contenant 0,25 M/l d'acide sulfamique extraction réalisée à 20°C.

Courbe IV:

Phase aqueuse contenant 0,25 M/l d'acide sulfamique et 0,5 M/l de nitrate d'uranyle, extraction réalisée à 50°C.

Courbe V:

Phase aqueuse ne contenant pas d'acide sulfamique, extraction réalisée à 50°C.

Au vu de ces courbes, on constate que:

— l'adjonction d'un sel d'ammonium quaternaire tel que le chlorure de tricaprylméthyl

ammonium au DEHDTP permet d'améliorer le coefficient de partage du ruthénium, excepté lorsque la phase aqueuse contient également de l'uranium, ce qui laisse supposer que le sel d'ammonium quaternaire réagit avec le nitrate d'uranyle et ne joue plus son rôle d'extractant vis-à-vis du ruthénium !I,

— l'effet de la température est le même que lors de l'utilisation d'un solvant organique comprenant seulement du DEHDTP dilué dans du dodécane, le coefficient de partage D augmentant également avec la température,

— l'adjonction d'acide sulfamique à la phase aqueuse permet également d'améliorer le coefficient de partage.

**Revendications**

1. Procédé de récupération du ruthénium présent dans une solution aqueuse par mise en contact de ladite solution avec une phase organique comprenant un composé organophosphoré comportant au moins un atome de soufre donneur d'électrons, caractérise en ce que ladite solution aqueuse étant une solution nitrique, on réalise la mise en contact de la solution aqueuse nitrique avec la phase organique en présence d'un composé apte à déplacer les ions $NO^+$ des complexes de ruthénium présents dans ladite solution nitrique.

2. Procédé selon la revendication 1, caractérisé en ce que ledit composé organophosphoré est un acide dialkyldithiophosphorique.

3. Procédé selon la revendication 2, caractérisé en ce que l'acide dialkyl-dithiophosphorique est l'acide di-(2-éthylhexyl)-dithiophosphorique.

4. Procédé selon l'une quelconque des revendications 1 à 3, caractérisé en ce que ledit composé est l'acide sulfamique.

5. Procédé selon l'une quelconque des revendications 1 à 3, caractérisé en ce que ledit composé est l'hydrazine.

6. Procédé selon la revendication 4, caractérise en ce que la concentration en acide sulfamique de la phase aqueuse est comprise entre 0,05 et 1 M/l.

7. Procédé selon l'une quelconque des revendications 1 à 6, caractérisé en ce qu'on réalise l'extraction à une température comprise entre 20 et 80°C.

8. Procédé selon l'une quelconque des revendications 1 à 7, caractérisé en ce que ladite phase organique comprend de plus un sel d'ammonium quaternaire.

9. Procédé selon la revendication 8, caractérisé en ce que ledit sel d'ammonium quaternaire est le chlorure de tricaprylméthyl ammonium.

10. Application du procédé selon l'une quelconque des revendications 1 à 7, à la récupération du ruthénium contenu dans une solution nitrique obtenue par dissolution d'éléments combustibles irradiés.

**Claims**

1. Process for the recovery of ruthenium present in an aqueous solution by contacting the said solution with an organic phase comprising an organophosphorus compound containing at least one electron-donor sulphur atom, characterized in that said aqueous solution is a nitric solution and the contacting of the aqueous nitric solution with the organic phase is conducted in the presence of a compound able to displace $NO^+$ ions from ruthenium complexes present in the said nitric solution.

2. Process according to Claim 1 characterized in that the said organophosphorus compound is a dialkyl-dithiophosphoric acid.

3. Process according to Claim 2 characterized in that the dialkyldithiophosphoric acid is di-(2-ethylhexyl) dithiophosphoric acid.

4. Process according to any one of Claims 1 to 3 characterized in that the said compound is sulphamic acid.

5. Process according to any one of Claims 1 to 3 characterized in that the said compound is hydrazine.

6. Process according to Claim 4 characterized in that the concentration of sulphamic acid in the aqueous phase is between 0.05 and 1 M/l.

7. Process according to any one of Claims 1 to 6 characterized in that the extraction is carried out at a temperature between 20 and 80°C.

8. Process according to any one of Claims 1 to 7 characterized in that the said organic phase comprises at least one quaternary ammonium salt.

9. Process according to Claim 8 characterized in that the said quaternary ammonium salt is tricapryl methyl ammonium chloride.

10. Application of the process according to any one of Claims 1 to 7 to the recovery of ruthenium from a nitric solution obtained by dissolving irradiated fuel elements.

**Patentansprüche**

1. Verfahren zur Wiedergewinnung von in einer wäßrigen Lösung vorhandenem Ruthenium durch Kontakt der Lösung mit einer organischen Phase, die eine Organophosphorverbindung enthält, die mindestens ein Schwefelatom als Elektronendonator aufweist, dadurch gekennzeichnet, daß die wäßrige Lösung eine salpetersaure Lösung ist, und man den Kontakt der wäßrigen salpetersauren Lösung mit der organischen Phase in Anwesenheit einer Verbindung durchführt, die geeignet ist, die Ionen $NO^+$ der in der salpetersauren Lösung vorhandenen Rutheniumkomplexe zu verdrängen.

2. Verfahren nach Anspruch 1, dadurch gekennzeichnet, daß die Organophosphorverbindung eine Dialkyldithiophosphorsäure ist.

3. Verfahren nach Anspruch 2, dadurch gekennzeichnet, daß die Dialkyldithiophosphorsäure Di-(2-äthylhexyl)-dithiophosphorsäure ist.

4. Verfahren nach einem der Ansprüche 1 bis 3, dadurch gekennzeichnet, daß die Verbindung Sulfamidsäure ist.

5. Verfahren nach einem der Ansprüche 1 bis 3, dadurch gekennzeichnet, daß die Verbindung Hydrazin ist.

6. Verfahren nach Anspruch 4, dadurch gekennzeichnet, daß die Konzentration der Sulfamidsäure in der wäßrigen Phase 0,05 bis 1 Mol/liter beträgt.

7. Verfahren nach einem der Ansprüche 1 bis 6, dadurch gekennzeichnet, daß man die Extraktion bei einer Temperatur von 20 bis 80°C durchführt.

8. Verfahren nach einem der Ansprüche 1 bis 7, dadurch gekennzeichnet, daß die organische Phase zusätzlich ein quaternäres Ammoniumsalz enthält.

9. Verfahren nach Anspruch 8, dadurch gekennzeichnet, daß das quaternäre Ammoniumsalz das Tricaprylmethylammoniumchlorid ist.

10. Verwendung des Verfahrens gemäß einem der Ansprüche 1 bis 7 zur Wiedergewinnung von Ruthenium, das in einer salpetersauren Lösung enthalten ist, die durch Auflösen von bestrahlten Brennelementen erhalten wurde.

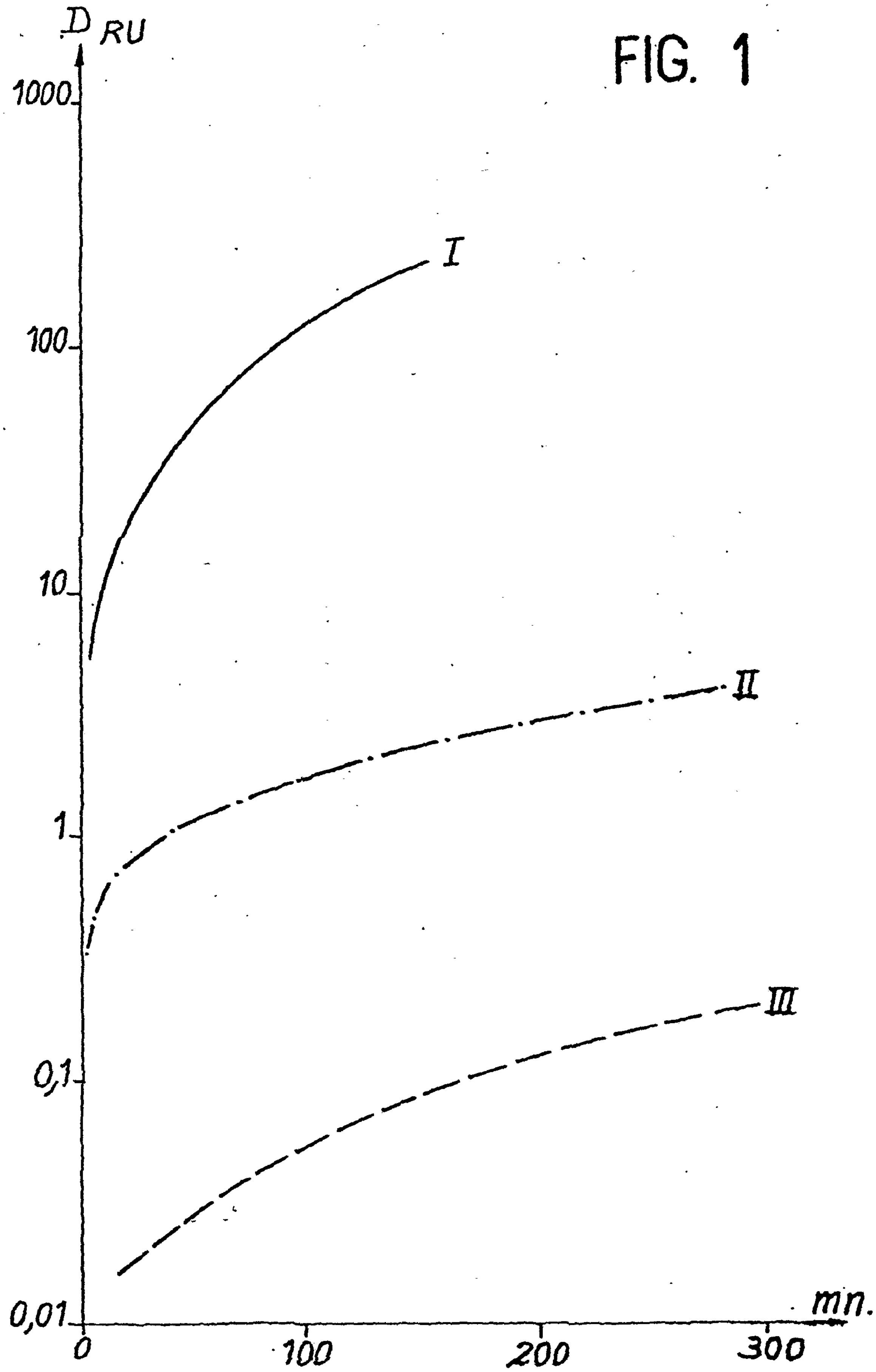


FIG. 1

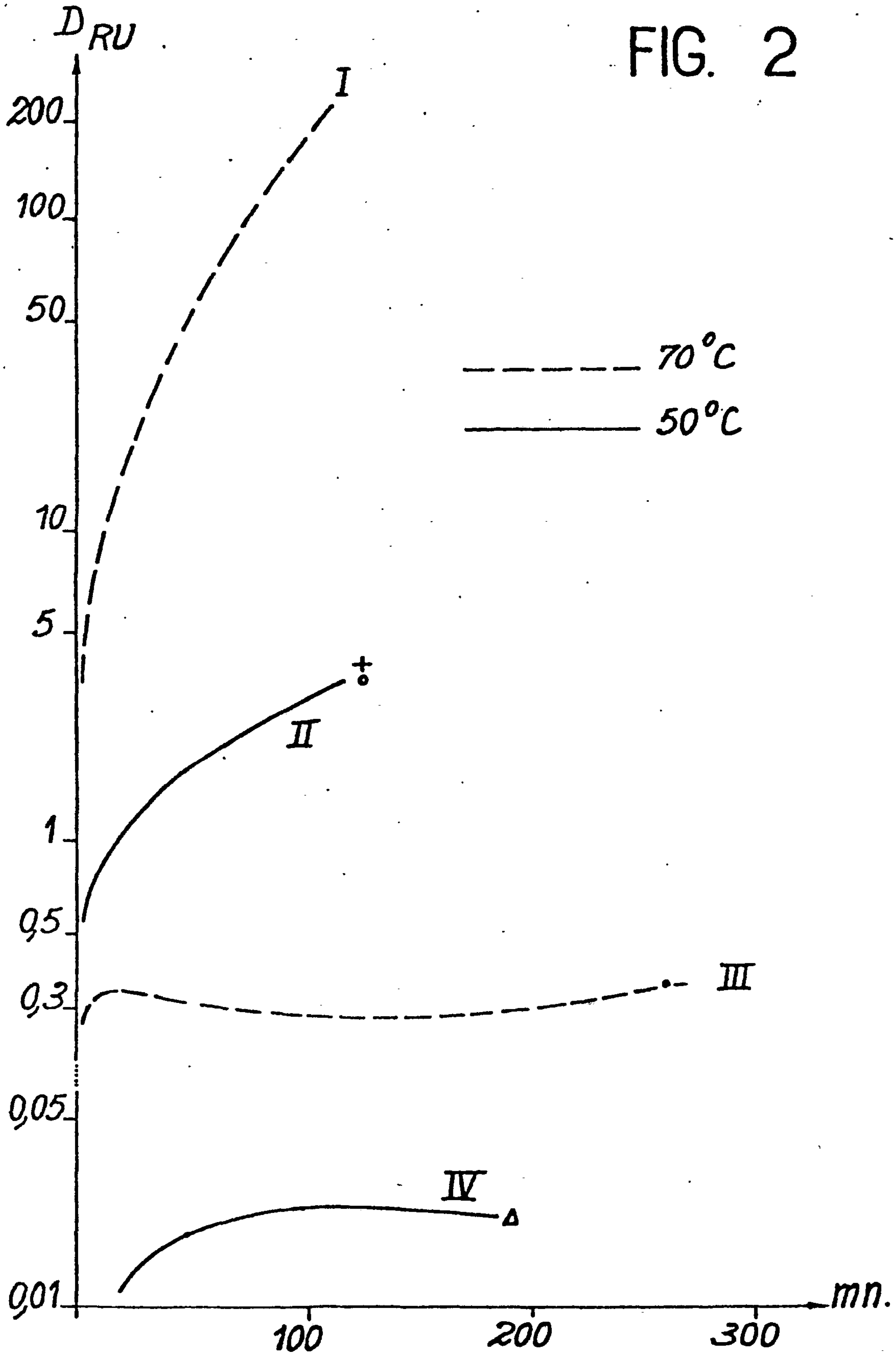

$D_{RU}$
200
100
50
10
5
1
0,5
0,3
0,05
0,01
I
II
III
IV
70°C
50°C
100
200
300
mn.


FIG. 2

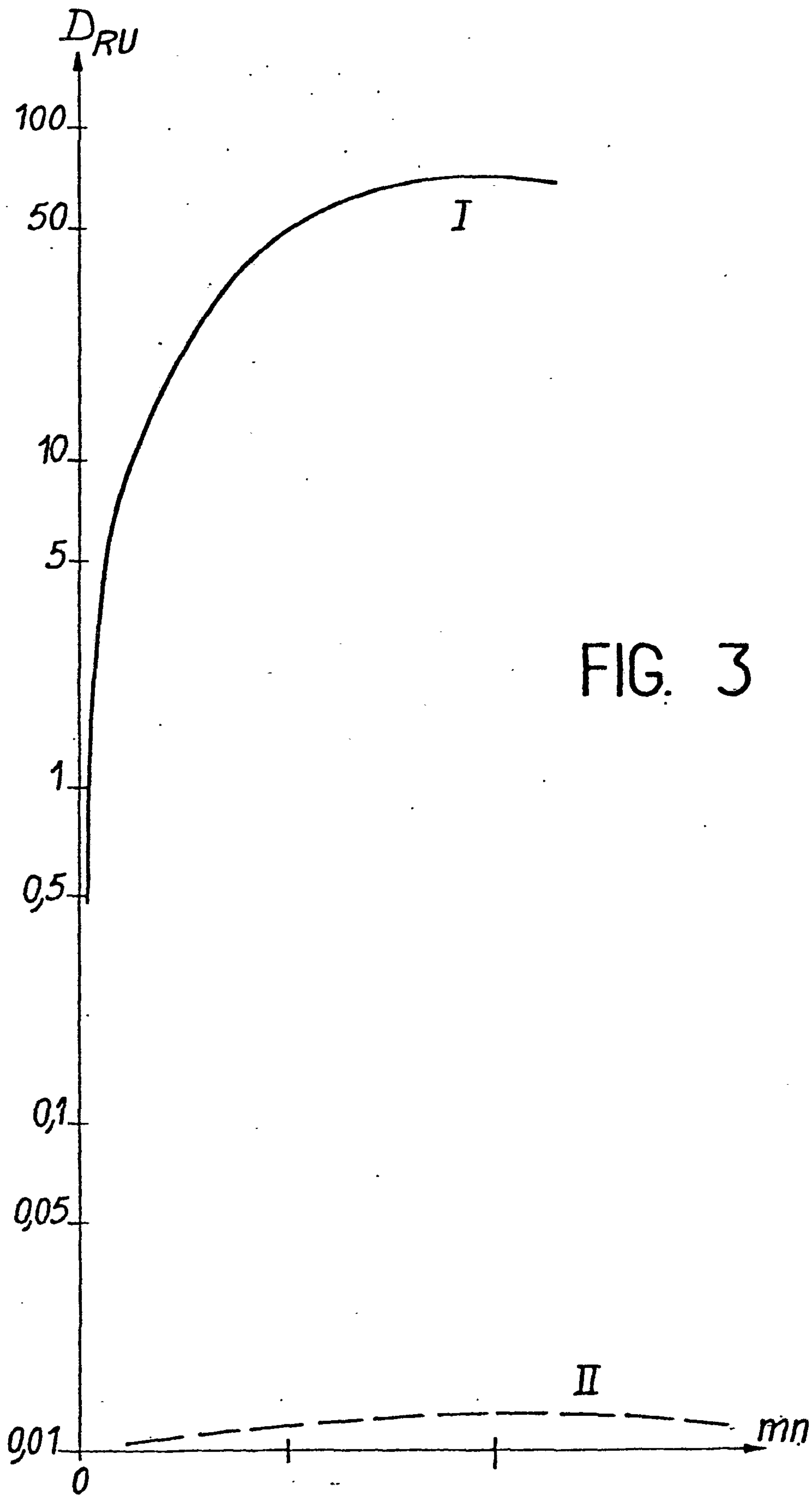


FIG. 3

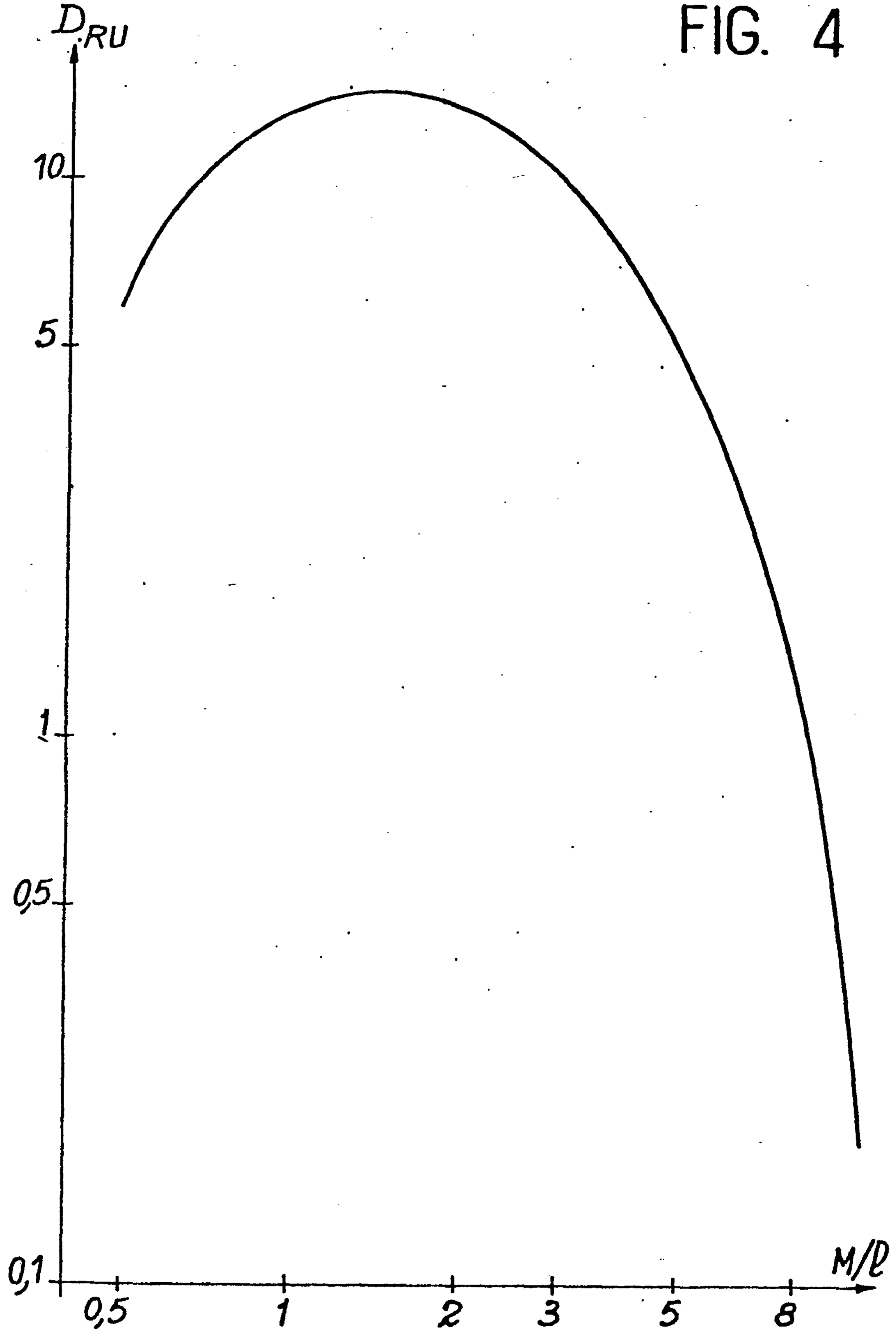


FIG. 4

FIG. 5

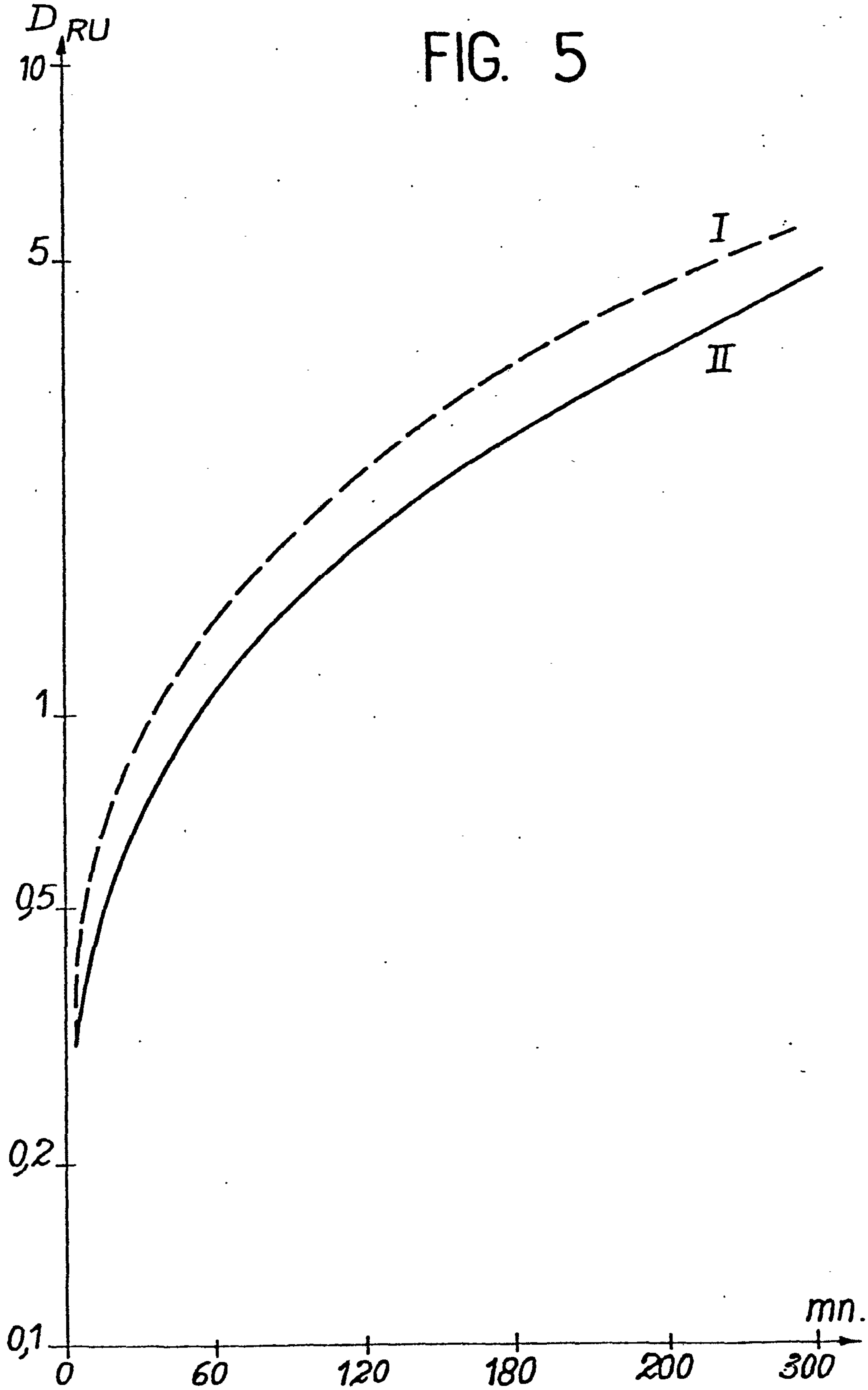

FIG. 6